# EUROPEAN PATENT SPECIFICATION

(11) **EP 1 753 886 B1**
(45) Date of publication and mention of the grant of the patent: **17.09.2008**
(21) Application number: 05738227.7
(22) Date of filing: 14.04.2005
(51) Int. Cl.: C22C 23/00, C01B 3/00

(54) **HYDROGEN STORAGE COMPOSITION**
WASSERSTOFFSPEICHERZUSAMMENSETZUNG
COMPOSITION DE STOCKAGE D'HYDROGENE

(30) Priority: 15.04.2004 GB 0408393
(43) Date of publication of application: 21.02.2007
(73) Proprietor: JOHNSON MATTHEY PUBLIC LIMITED COMPANY, 40-42 Hatton Garden London EC1N 8EE (GB)
(72) Inventor: BOYD, David Alan, Sonning Common, Reading RG4 9SJ (GB); GUTFLEISCH, Oliver, 01309 Dresden (DE); PRATT, Allin Sidney, Wallingford OX10 8HF (GB)
(74) Representative: Nunn, Andrew Dominic
(86) International application number: PCT/GB2005/001438
(87) International publication number: WO 2005/100624

(56) References cited:
- EP-A- 1 215 294
- WO-A-03/006319
- WO-A-20/04016817
- US-A- 5 494 538
- US-B1- 6 478 844

## Description

This invention relates to a hydrogen storage composition and in particular to a hydrogen storage composition comprising a particulate alloy comprising magnesium and nickel.

Hydrogen has great potential as an energy source because it can be easily generated from renewable sources and its use creates neither air pollution nor greenhouse gas emissions. The principal problem with the use of hydrogen is that as a gas it is difficult to store, it may be stored in vessels as a cryogenic liquid or as a compressed gas but such storage vessels are not well suited to everyday use.

An alternative means of releasably storing hydrogen over a plurality of cycles is to use a metal or an alloy, where the metal or alloy absorbs and stores relatively large amounts of hydrogen by bonding with the hydrogen to form a hydride. These materials have the ability to absorb and release hydrogen without deteriorating. The rate of absorption and desorption can be controlled by temperature and pressure. The United States Department of Energy (DoE) have set a target (to be achieved by 2010), by which hydrogen storage materials may be judged for their potential practicable value. This target includes a storage capacity of 6 wt% (see Hydrogen Storage: The Key Challenge Facing a Hydrogen Economy by Motyka et al., published in March 2004, available from the US Office of Scientific and Technical Information).

Magnesium itself has a relatively high capacity for hydrogen storage, in the form of magnesium hydride, but unfortunately the reaction kinetics for the absorption and desorption of hydrogen are too slow. An additional problem is that hydride formation at the surface of the magnesium particles can block further diffusion of hydrogen into the bulk of the material.

In prior proposals, it was realised that increasing the surface area of the magnesium particles could improve the hydrogen absorption and des orption characteristics and thus different techniques were tried in an effort to achieve this.

High energy ball milling has been used to create mechanical alloys of magnesium of significantly smaller particle size. This technique introduces large numbers of dislocations within the metal crystals with large areas of grain (or crystallite) boundaries and high levels of internal defects. These grain boundaries act as paths for the fast diffusion of hydrogen and reduce the volume of material that is accessed by one path, such that hydrogen absorption and desorption times are substantially reduced.

The ball milling technique is a popular approach to improving the hydrogen storage characteristics of magnesium, and many publications study this process and how varying the conditions of the process may influence the final material (e.g. Huot et al., J. Alloy. Compd., 1995, 231, 1-2, p. 815-819; Schulz et al., Mat. Sci. Eng. A-Struct., 1999, A267, 2, p. 240-245; Bobet et al., Mater. Manuf. Process, 2002, 17, 3, p. 351-361). Another focus of hydrogen storage research has been to determine how additives may influence the properties of magnesium hydrides, possibly by catalysing the dissociation of H₂ molecules at the absorbing surface. This work has tended to concentrate on cobalt, iron and nickel, which are mechanically alloyed with the magnesium during the ball milling stage (Bobet et al., Int. J. Hydrogen Energy, 2000, 25, 10, p. 987-996). Recently we have shown that ball milling of at least one reducible platinum group metal (PGM) compound with magnesium, for a fraction of the overall milling time, results in nanoparticles of PGMs being located predominantly at the surface of the milled particles (WO 2004/016817). The addition of nanoparticles of PGMs was shown to improve the hydrogen absorption / desorption characteristics of the milled material.

Another approach to improve hydrogen storage capacity and absorption/desorption kinetics was proposed by Friedlmeier et al., who prepared a magnesium nickel alloy by melting the two metals together, then grinding the alloy to produce small particles (Int. J. Hydrogen Energy, 1988, 13, 8, p. 467-474).

GB 524,113 and GB 596,102 describe magnesium alloys that may contain nickel and other transition metals. The alloys are intended for structural purposes and may be cast, forged, extruded or pressed to form articles such as engine parts. US 6478844B1 discloses a magnesium based alloy powder including 0.5 to 2.5 wt.% Ni as a hydrogen storage material.

However, although extensive studies on metal substitution and milling techniques have been carried out on alloys suitable for hydrogen storage to date, nothing has yet been developed to reliably meet all the requirements set down by the DoE.

We have now found, very surprisingly, that a magnesium-containing alloy, comprising ≤ 5 wt% nickel and ≤ 0.5 wt% of at least one non-nickel transition metal, prepared by melting the magnesium, nickel and the at least one non-nickel transition metal is a more active hydrogen storage material than prior art alloys containing significantly more nickel. We believe that this is due to the unusual structure of the alloy produced when the alloy is cooled from the melt, wherein the internal structure of the solid comprises grains (or crystallites) of magnesium surrounded by grain boundaries of a different chemical composition (i.e. made up of a different phase). The chemical composition of the grain boundaries is rich in the nickel and the at least one non-nickel transition metal in comparison with the chemical composition of the grains themselves.

According to one aspect, the invention provides a hydrogen storage composition comprising a particulate alloy comprising grains of magnesium, wherein the grain boundaries contain phases comprising of nickel and at least one non-nickel transition metal selected from the group consisting of Pt, Pd, Ru, Ir, Ag, Au, Cu, Co, W and mixtures of any two or more thereof, wherein the alloy consists of from 0.01 wt% to 5.00 wt% of nickelbased on the composition as a whole, and 0.01 wt% to 0.50 wt% of the at least one non-nickel transition metal based on the composition as a whole, and the balance consists of magnesium and unavoidable impurities. The grain boundaries are present within the internal structure of the particles, as well as forming the surface of the solid particle, and therefore are not located solely at the surface of the solid.

Usefully, we have found that the proportion of nickel present can be less than 2 wt%, or even as low as from 0.01 wt% to 1.00 wt%, without significantly impacting upon hydrogen uptake and storage characteristics. Additionally, we have found that the proportion of the at least one non-nickel transition metal present may be at levels as low as from 0.01 wt% to 0.50 wt%, commonly between 0.01 wt% and 0.20 wt%, without significantly impacting upon hydrogen uptake and storage characteristics.

In one embodiment, the composition comprises particles of the alloy of an average size of less than 500 µm, commonly less than 50 µm or even as small as 500 nm.

Whereas the composition, as described, includes grains of magnesium metal, it will be appreciated that, in use, this metal will be in the form of a magnesium compound, particularly magnesium hydride. Therefore, in one embodiment, the composition comprises the magnesium in the form of a hydride.

In one embodiment, the non-nickel transition metal is at least one of Pt, Pd, Ru, Ir, Ag or a mixture of any two or more thereof. The presence of the at least one non-nickel transition metal aids hydrogen absorption, but it need not add significantly to the expense of the composition as relatively small levels of the metals are needed to achieve an advantageous improvement in activity.

According to a further aspect, the invention provides a method of making a composition, according to the invention, wherein the magnesium, nickel and the at least one non-nickel transition metal are melted to form an alloy. This alloy will then be cooled, preferably at a high cooling rate (for example ≥50 °C/s for at least the first two seconds), to produce solid alloy, and then processed to produce particles of the desired size.

This processing step commonly involves casting of the molten alloy, although the molten alloy may be cooled and processed simultaneously by powder spray atomisation to form a solid alloy of reduced particle size (in comparison to that formed by casting alone). If additional processing is necessary to reduce the particle size of the solid alloy to less than 500 µm, then this may be carried out by grinding the solid alloy to produce coarse particles. Additionally the alloy particles may be milled to produce particles of an even smaller crystallite size with high surface area, as desired, preferably under hydrogen to produce the hydride phase suited for use as a storage material.

According to another aspect, the invention provides an apparatus for providing, on demand, a replenishable supply of hydrogen, which apparatus comprising:
(i) a container comprising a hydrogen storage composition according to the invention;
(ii) means for adjusting the pressure within the container;
(iii) means for adjusting the temperature of the contents of the container; and
(iv) means, in use, for controlling the pressure adjusting means and/or the temperature adjusting means.

Such an apparatus may have hydrogen storage capacities in excess of 6 wt% and 60 Kg/m³ based on a powder packing density of 1 g/cm³. One advantage of this apparatus is that the control means controls the temperature adjusting means to heat the hydrogen storage composition to temperatures of from 100 to 350°C, thereby to absorb or desorb hydrogen in the hydrogen storage composition. Additionally, the control means controls the pressure adjusting means to adjust the pressure in the container to pressures of from 1 to 10 bar (10⁻² to 10⁻¹ kPa), thereby to absorb or desorb hydrogen therein. Generally, hydrogen absorption occurs at a lower temperature and higher pressure than hydrogen desorption.

The pressure adjusting means may comprise a valve and/or a pump to enable hydrogen to be released from the container and supplied to a relevant application, e.g. a fuel cell, at an appropriate pressure; and for the container and, hence, the composition to be replenished with hydrogen from a suitable source.

In one embodiment, the invention provides a mobile power source comprising an apparatus as described above, whereas in another embodiment the invention provides a stationary power source comprising an apparatus as described above.

According to one aspect, the invention provides a method of providing, on demand, a replenishable supply of hydrogen, which method comprising providing a composition according to the invention, comprising a magnesium hydride, in a temperature range of from 100 to 350 °C and a pressure range of from 1 to 10 bar (10⁻² to 10⁻¹ kPa), thereby to desorb hydrogen absorbed therein.

In order that the invention may be more fully understood an apparatus embodiment and the following Examples are provided by way of illustration only and with reference to the accompanying drawings, in which:
Figure 1 is a graph of hydrogen absorption from a particulate Mg/1 wt% Ni/0.2 wt% Pd composition, prepared according to the method described in Example 1, at temperatures ranging from 100 °C to 300 °C;
Figure 2 is a graph of hydrogen desorption from a particulate Mg/1 wt% Ni/0.2 wt% Pd composition, prepared according to the method described in Example 1, at temperatures ranging from 250 °C to 350 °C;
Figure 3 is a graph of hydrogen absorption from a particulate Mg/1 wt% Ni/0.2 wt% Pd composition, prepared according to the method described in Example 1, at temperatures ranging from 250 °C to 300 °C, after from 1 to 11 absorption / desorption cycles;
Figure 4 is a graph of hydrogen desorption from a particulate Mg/1 wt% Ni/0.2 wt% Pd composition, prepared according to the method described in Example 1, at 300 °C, after from 1 to 9 absorption / desorption cycles;
Figure 5 is an electron microscopy image showing a particulate magnesium alloy, prepared according to the method described in Example 1, with nickel and palladium-rich grain boundaries;
Figure 6 is an electron probe microanalysis image, collected using X-ray fluorescence to highlight the presence of magnesium, of a composition prepared according to the method described in Example 1;
Figure 7 is an electron probe microanalysis image, collected (on the same area of the same sample as Figure 6) using X-ray fluorescence to highlight the presence of nickel;
Figure 8 is an electron microscopy image, collected (on the same area of the same sample as Figure 6) using X-ray fluorescence to highlight the presence of palladium;
Figure 9 is a comparative graph of hydrogen absorption from a milled Mg /1 wt% Ni/ 0.5 wt% Pd composition, prepared according to the method described in Example 2, at 300 °C after from 1 to 4 absorption / desorption cycles; and
Figure 10 is a schematic diagram of an apparatus embodiment according to the invention.

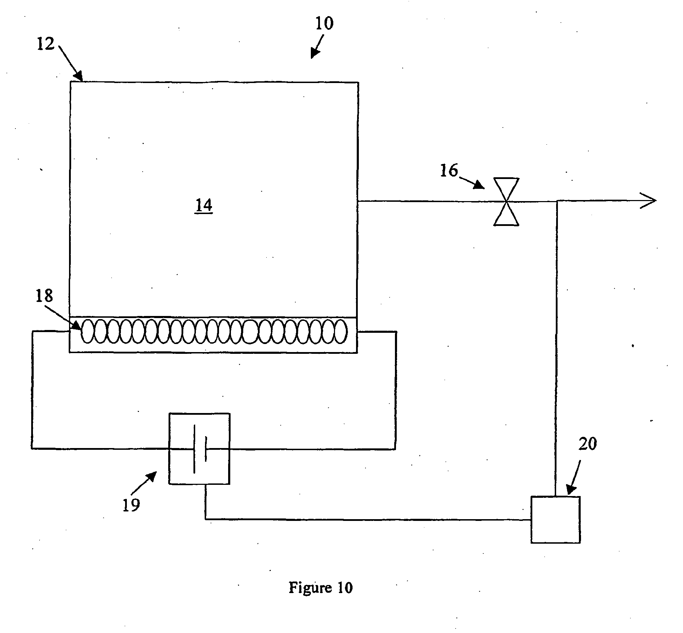

Referring to Figure 10, apparatus 10 comprises a container 12 containing a hydrogen storage composition 14, valve means 16 for adjusting the pressure within the container, heating means 18, comprising a heating element, for adjusting the temperature of the contents of the container, a power supply 19 for the temperature adjusting means and means 20, in use, for controlling the pressure adjusting means and/or the temperature adjusting means.

In use, a hydrogen demand input is made to control means 20 for a supply of hydrogen. Control means 20 directs valve means 16 to open to enable hydrogen supply (thereby releasing pressure in the container thereby promoting hydrogen release from composition 14) and to activate heating means to increase the temperature of hydrogen storage composition 14, e.g. towards 300 °C, thereby to promote release of hydrogen. The hydrogen demand input can be controlled by suitable open-loop feedback means (not shown) in order to control the rate of hydrogen supply required or to stop hydrogen supply completely as required.

In order to replenish a depleted amount of stored hydrogen in composition 14, valve 16 is controlled to open to enable a high pressure supply of hydrogen to be admitted to container and heating means 18 is deactivated. In order to promote more rapid absorption of the hydrogen in composition 14, it may be desirable to provide refrigeration means (not shown) in order to more rapidly cool the composition, e.g. towards 200 °C, to promote absorption of hydrogen. However, such refrigeration means is unnecessary if the hydrogen supply is at low temperature.

### EXAMPLE 1

### Preparation of Mg/1 wt% Ni/0.2 wt% Pd by melting and milling

99.9g magnesium and 1g nickel together with 0.2 g palladium were weighed out, (the excess of magnesium is present to compensate for the approximate 1% vapour loss experienced during melting) and melted in a pre-dried, heated Alumina crucible under 250-300 mbar (2.5 x 10⁻³ to 3.0 x 10⁻³ kPa) Ar in a Balzers VSG002 vacuum melting furnace after initial evacuation at 10-5 torr. Melting time was approximately 10 minutes, and the melt was kept in the molten state for the shortest time that allowed complete dissolution and mixing, about 2 minutes. The molten charge was then cast into a copper chill mould from approximately 100 °C above the melting point. The recovered ingot was cleaned, and reduced to a crude powder under Ar by mechanical means before being transferred to an IFW Dresden for milling under hydrogen for > 100 hours.

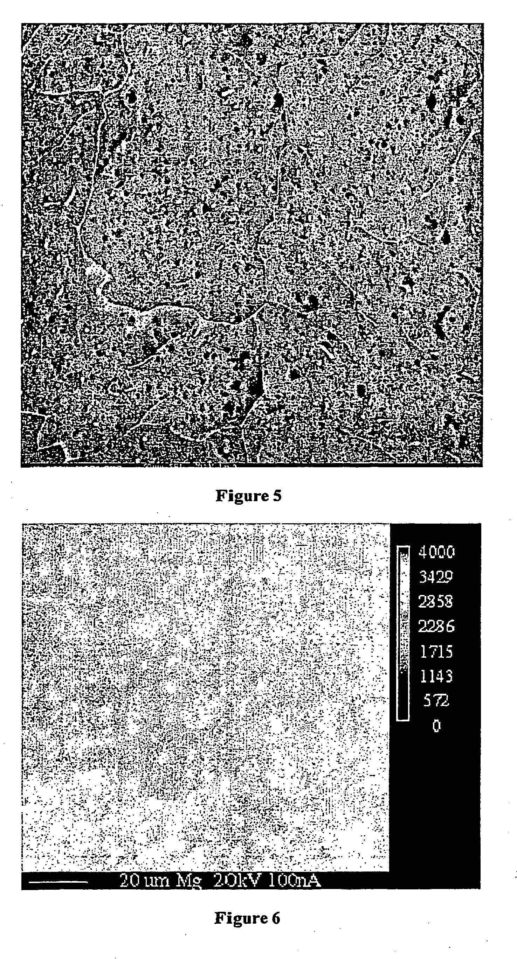

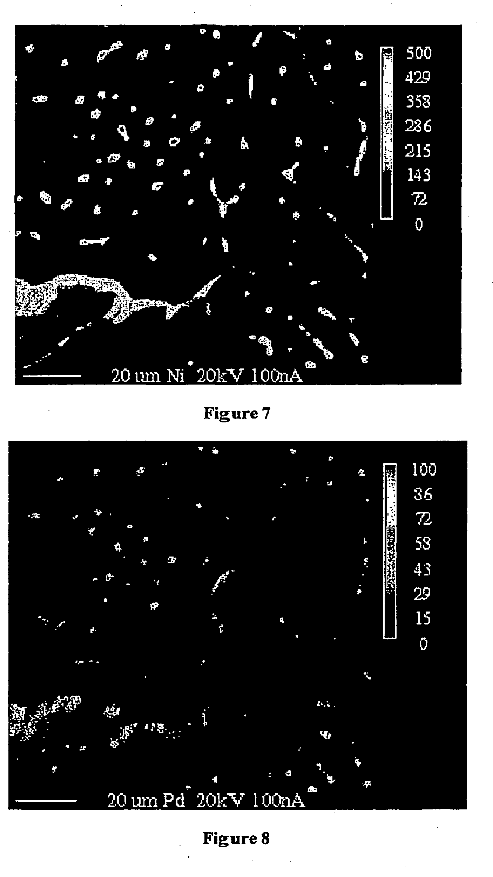

Electron microscope images for the composition are shown in Figures 5 to 8. In particular, it can be seen in Figure 6 that the magnesium is uniformly spread throughout the grains of the particulate magnesium alloy because the grey shade indicates a high proportion of magnesium whilst the lighter shade represents the lesser amount of magnesium found in the grain boundaries. Figures 7 and 8 demonstrate the presence of nickel and palladium at the grain boundaries of the particulate magnesium alloy as the dark areas indicate that very little nickel and palladium is present within the grains whilst the grey areas show that a greater amount of these metals is present in the grain boundaries.

### EXAMPLE 2

### Preparation of Mg/1 wt% Ni 0.5% PGM by milling only

24.75g magnesium hydride and 0.25g nickel were weighed out and milled under 3 bar (3 x 10⁻² kPa) hydrogen for 30 hours at 350 rpm, according to a 15 mins on / 10 mins off cycle. The ball charge was 15 x 20mm balls in a 250 ml pot. 0.125 g of palladium nanoparticles were added for the last hour of milling.

### EXAMPLE 3

### Hydrogen Absorption and Desorption Measurements

Hydrogen absorption and desorption measurements were carried on the composition of Example 1 using a Hiden Analytical IGA (Intelligent Gravimetric Analyser) at varied temperatures. Hydrogen absorption was carried out using H₂ gas at a pressure of 10 bar (10⁻¹ kPa). Hydrogen desorption was carried out using H₂ gas at a pressure of either 1 bar or 50 mbar (1 x 10⁻² to 5 x 10⁻³ kPa).

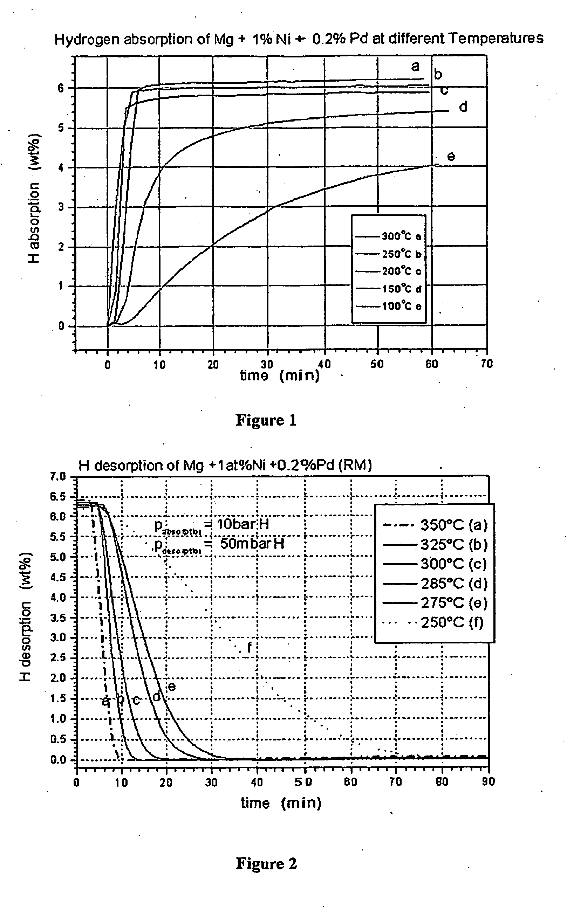

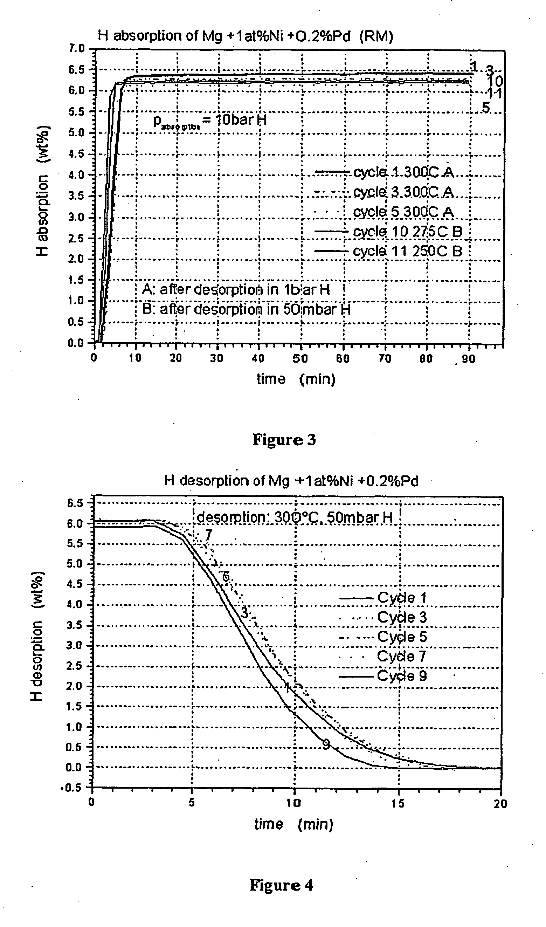

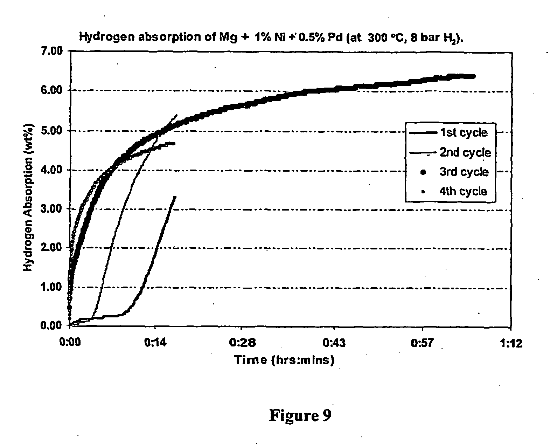

The results of the IGA hydrogen adsorption and desorption measurements are set out in Figures 1 and 2, which show that the composition of Example 1 absorbs hydrogen to levels in excess of 6 wt% in less than 60 mins at temperatures as low as 250 °C and desorbs hydrogen fully within 30 mins at temperatures as low as 275 °C. Additionally, Figures 3 and 4 demonstrate that this composition continues to exhibit the favourable characteristics of readily absorbing and desorbing approx. 6 wt% of hydrogen at temperatures ≤ 300 °C after multiple absorption / desorption cycles, in contrast to the milled only composition shown in Figure 9.

## Claims

1. A hydrogen storage composition comprising a particulate alloy comprising grains of Magnesium, wherein the grain boundaries contain phases comprising nickel and at least one non-nickel transition metal selected from the group consisting of Pt, Pd, Ru, Ir, Ag, Au, Cu, Co, W and mixtures of any two or more thereof, wherein the alloy consists of from 0.01 wt% to ≤ 5.00 wt% of nickel based on the composition as a whole and 0.01 wt% to ≤ 0.5 wt% of the at least one non-nickel transition metal based on the composition as a whole, and the balance consists of magnesium and unavoidable impurities.

2. A composition according to claim 1, wherein the particles of the alloy have an average size of less than 500 µm.

3. A composition according to claim 1 or 2, comprising nickel at from 0.01 wt% to 2.00 wt%, optionally 0.01 wt% to 1.00 wt%, based on the composition as a whole.

4. A composition according to claim 1, 2 or 3, wherein the at least one non-nickel transition metal is selected from the group consisting of Pt, Pd, Ru, Ir, Ag and mixtures of any two or more thereof.

5. A composition according to any preceding claim, wherein the at least one non-nickel transition metal is present at levels of from 0.01 wt% to 0.50 wt%, optionally 0.01 wt% to 0.20 wt% based on the composition as a whole.

6. A composition according to any preceding claim, wherein the magnesium is in the form of a hydride.

7. A method of making a composition according to any preceding claim, comprising melting the magnesium, nickel and the at least one non-nickel transition metal to form an alloy, cooling the molten alloy to produce a solid alloy and processing the solid alloy to produce particles of the desired size.

8. A method according to claim 7, wherein the melted alloy is cooled by casting, and the solid alloy formed is processed by grinding and/or milling.

9. A method according to claim 7, wherein the melted alloy is cooled and processed by powder spray atomisation, and optionally the solid alloy formed is processed by grinding and/or milling.

10. A method according to claim 8 or 9, wherein when the solid alloy is processed by milling, the milling is carried out under an atmosphere comprising hydrogen to produce magnesium hydride.

11. An apparatus (10) for providing, on demand, a replenishable supply of hydrogen, which apparatus comprising:
(i) a container (12) comprising a hydrogen storage composition (14) according to any of claims 1 to 6;
(ii) means for adjusting the pressure within the container (16);
(iii) means for adjusting the temperature of the contents of the container (18); and
(iv) means, in use, for controlling the pressure adjusting means and/or the temperature adjusting means (20).

12. An apparatus according to claim 11, wherein the control means controls the temperature adjusting means to heat the hydrogen storage composition to temperatures of from 100 to 350 °C, thereby to absorb or desorb hydrogen in the hydrogen storage composition.

13. An apparatus according to claim 11 or 12, wherein the control means controls the pressure adjusting means to adjust the pressure in the container to pressures of from 1 to 10 bar (10⁻² to 10⁻¹ kPa), thereby to absorb or desorb hydrogen therein.

14. A method of providing, on demand, a replenishable supply of hydrogen, which method comprising providing a composition according to claim 6 at a temperature of from 100 to 350 °C and a pressure of from 1 to 10 bar (10⁻² to 10⁻¹ kPa), thereby to desorb hydrogen absorbed therein.

## Patentansprüche

1. Zusammensetzung zum Speichern von Wasserstoff, umfassend eine partikuläre Legierung von Magnesiumkörnern, deren Kornumgrenzungen Phasen enthalten, die Nickel und wenigstens ein Nicht-Nickel Übergangsmetall enthalten, das aus der Gruppe ausgewählt ist, die besteht aus Pt, Pd, Ru, Ir, Ag, Au, Cu, Co, W und Gemischen von zwei oder mehr dieser Metalle, worin die Legierung besteht aus 0,01 Gew.-% bis ≤ 5,00 Gew.-% Nickel, basierend auf der gesamten Zusammensetzung, und 0,01 Gew.-% bis ≤ 0,5 Gew.-% des wenigstens einen Nicht-Nickel Übergangsmetalls, basierend auf der gesamten Zusammensetzung, wobei der Rest aus Magnesium und unvermeidbaren Verunreinigungen besteht.

2. Zusammensetzung nach Anspruch 1, worin die Partikel der Legierung eine mittlere Größe von weniger als 500 µm haben.

3. Zusammensetzung nach Anspruch 1 oder 2, umfassend Nickel in Mengen von 0,01 Gew.-% bis 2,00 Gew.-%, optional 0,01 Gew.-% bis 1,00 Gew.-%, basierend auf der gesamten Zusammensetzung.

4. Zusammensetzung nach Anspruch 1, 2 oder 3, worin das wenigstens eine Nicht-Nickel Übergangsmetall ausgewählt ist aus der Gruppe, die besteht aus Pt, Pd, Ru, Ir, Ag und Gemischen von zwei oder mehr dieser Metalle.

5. Zusammensetzung nach einem der vorhergehenden Ansprüche, worin das wenigstens eine Nicht-Nickel Übergangsmetall in Mengen von 0,01 Gew.-% bis 0,50 Gew.-%, optional 0,01 Gew.-% bis 0,20 Gew.-%, vorhanden ist, basierend auf der gesamten Zusammensetzung.

6. Zusammensetzung nach einem der vorhergehenden Ansprüche, worin das Magnesium in Form eines Hydrids vorhanden ist.

7. Verfahren zur Herstellung einer Zusammensetzung nach einem der vorhergehenden Ansprüche, umfassend ein Schmelzen des Magnesiums, des Nickels und des wenigstens einen Nicht-Nickel Übergangsmetalls unter Bildung einer Legierung, Abkühlung der geschmolzenen Legierung unter Bildung einer festen Legierung und Verarbeitung der festen Legierung zur Herstellung von Partikeln mit der gewünschten Größe.

8. Verfahren nach Anspruch 7, worin die geschmolzene Legierung durch Gießen gekühlt wird, und die gebildete feste Legierung durch Vermahlung und/oder Zerkleinerung verarbeitet wird.

9. Verfahren nach Anspruch 7, worin die geschmolzene Legierung abgekühlt und verarbeitet wird durch Pulversprühatomisation, und die gebildete feste Legierung optional verarbeitet wird durch Vermahlung und/oder Zerkleinerung.

10. Verfahren nach Anspruch 8 oder 9, worin die feste Legierung durch Zerkleinerung verarbeitet wird, wobei die Zerkleinerung durchgeführt wird in einer Wasserstoff umfassenden Atmosphäre zur Bildung von Magnesiumhydrid.

11. Apparatur (10) zur bedarfsweisen Bereitstellung eines wieder auffüllbaren Vorrats von Wasserstoff, wobei diese Apparatur umfasst:
(i) einen Behälter (12), umfassend eine Zusammensetzung zum Speichern von Wasserstoff (14) nach einem der Ansprüche 1 bis 6,
(ii) Mittel zur Einstellung des Drucks innerhalb des Behälters (16),
(iii) Mittel zur Einstellung der Temperatur des Inhalts des Behälters (18), und
(iv) Mittel, in Betrieb, zur Steuerung der Druckeinstellungsmittel und/oder der Temperatureinstellungsmittel (20).

12. Apparatur nach Anspruch 11, worin das Steuermittel die Temperatureinstellungsmittel derart steuert, dass die Zusammensetzung zum Speichern von Wasserstoff auf Temperaturen von 100 bis 350 °C erwärmt wird und dass dabei Wasserstoff in der Zusammensetzung zum Speichern von Wasserstoff absorbiert oder desorbiert wird.

13. Apparatur nach Anspruch 11 oder 12, worin das Steuermittel die Druckeinstellungsmittel derart steuert, dass der Druck in dem Behälter auf Drücke von 1 bis 10 bar (10⁻² bis 10⁻¹ kPa) eingestellt wird und dass dabei Wasserstoff absorbiert oder desorbiert wird.

14. Verfahren zur bedarfsweisen Bereitstellung eines wieder auffüllbaren Vorrats von Wasserstoff, wobei dieses Verfahren umfasst die Bereitstellung einer Zusammensetzung nach Anspruch 6 mit einer Temperatur von 100 bis 350 °C und einem Druck von 1 bis 10 bar (10⁻² bis 10⁻¹ kPa) unter Desorption des darin absorbierten Wasserstoffs.

## Revendications

1. Composition de stockage d'hydrogène comprenant un alliage particulaire comprenant des grains de magnésium, où les limites des grains contiennent des phases composées de nickel et d'au moins un métal de transition qui n'est pas du nickel choisi dans le groupe constitué par Pt, Pd, Ru, Ir, Ag, Au, Cu, Co, W et les mélanges de deux éléments quelconques de ce groupe ou plus, dans laquelle l'alliage est constitué par 0,01% en poids à ≤ 5,00% en poids de nickel sur base de la composition dans sa totalité et par 0,01% en poids à ≤ 0,5% en poids dudit au moins un métal de transition qui n'est pas du nickel sur base de la composition dans sa totalité, et l'équilibre est composé de magnésium et d'impuretés inévitables.

2. Composition selon la revendication 1, dans laquelle les particules de l'alliage présentent une taille moyenne inférieure à 500 µm.

3. Composition selon la revendication 1 ou 2, comprenant du nickel à raison de 0,01% en poids à 2,00% en poids, éventuellement de 0,01% en poids à 1,00% en poids, sur base de la composition dans sa totalité.

4. Composition selon la revendication 1, 2 ou 3, dans laquelle ledit au moins un métal de transition qui n'est pas du nickel est choisi dans le groupe constitué par Pt, Pd, Ru, Ir, Ag et les mélanges de deux éléments quelconques de ce groupe ou plus.

5. Composition selon l'une quelconque des revendications précédentes, dans laquelle ledit au moins un métal de transition qui n'est pas du nickel est présent à des niveaux de 0,01% en poids à 0,50% en poids, éventuellement de 0,01% en poids à 0,20% en poids sur base de la composition dans sa totalité.

6. Composition selon l'une quelconque des revendications précédentes, dans laquelle le magnésium est sous forme d'un hydrure.

7. Procédé pour préparer une composition selon l'une quelconque des revendications précédentes, comprenant la fusion du magnésium, du nickel et dudit au moins un métal de transition qui n'est pas du nickel pour former un alliage, le refroidissement de l'alliage fondu pour produire un alliage solide et le traitement de l'alliage solide pour produire des particules de la taille souhaitée.

8. Procédé selon la revendication 7, dans lequel l'alliage fondu est refroidi par moulage et l'alliage solide formé est transformé par meulage et/ou broyage.

9. Procédé selon la revendication 7, dans lequel l'alliage fondu est refroidi et transformé par pulvérisation-atomisation de poudre et, éventuellement, l'alliage solide formé est transformé par meulage et/ou broyage.

10. Procédé selon la revendication 8 ou 9, dans lequel l'alliage solide est traité par broyage, le broyage étant effectué dans une atmosphère comprenant de l'hydrogène pour produire de l'hydrure de magnésium.

11. Appareil (10) pour fournir, sur demande, une alimentation régénérable d'hydrogène, ledit appareil comprenant :
(i) un conteneur (12) comprenant une composition de stockage d'hydrogène (14) selon l'une quelconque des revendications 1 à 6 ;
(ii) des moyens pour ajuster la pression dans le conteneur (16) ;
(iii) des moyens pour ajuster la température des contenus du conteneur (18) ; et
(iv) des moyens, lors de l'utilisation, pour commander les moyens d'ajustement de la pression et/ou les moyens d'ajustement de la température (20).

12. Appareil selon la revendication 11, dans lequel le moyen de contrôle commande les moyens d'ajustement de la température pour chauffer la composition de stockage d'hydrogène à des températures de 100 à 350°C, absorbant ou désorbant de ce fait l'hydrogène dans la composition de stockage de l'hydrogène.

13. Appareil selon la revendication 11 ou 12, dans lequel le moyen de contrôle commande les moyens d'ajustement de la pression pour ajuster la pression dans le conteneur à des pressions de 1 à 10 bars (10⁻² à 10⁻¹ kPa), absorbant ou désorbant de ce fait l'hydrogène qui y est contenu.

14. Procédé pour fournir, sur demande, une alimentation régénérable d'hydrogène, ledit procédé comprenant la fourniture d'une composition selon la revendication 6 à une température de 100 à 350°C et à une pression de 1 à 10 bars (10⁻² à 10⁻¹ kPa), désorbant de ce fait l'hydrogène qui y est absorbée.
